# EUROPEAN PATENT APPLICATION

(11) **EP 4 467 506 A1**
(43) Date of publication of application: **27.11.2024**
(21) Application number: 23742961.8
(22) Date of filing: 19.01.2023
(51) Int. Cl.: B66C 1/10, B66C 13/06, B66C 13/16

(54) **AIR TRANSPORTATION VEHICLE AND CONTROL METHOD THEREFOR**

(30) Priority: 19.01.2022 CN 202210061588
(71) Applicant: CRRC Yangtze Group Co., Ltd., Wuhan, Hubei 430212 (CN)
(72) Inventor: BAI, Yuanqiang, Wuhan, Hubei 430212 (CN); WANG, Quanhu, Wuhan, Hubei 430212 (CN); SU, Lijie, Wuhan, Hubei 430212 (CN); LIU, Aiwen, Wuhan, Hubei 430212 (CN); MEI, Kun, Wuhan, Hubei 430212 (CN); CUI, Can, Wuhan, Hubei 430212 (CN); YAO, Xiong, Wuhan, Hubei 430212 (CN); HUANG, Meilin, Wuhan, Hubei 430212 (CN); HOU, Jianyun, Wuhan, Hubei 430212 (CN); LUO, Hui, Wuhan, Hubei 430212 (CN); FENG, Ye, Wuhan, Hubei 430212 (CN); KE, Xiaole, Wuhan, Hubei 430212 (CN)
(74) Representative: Zaboliene, Reda
(86) International application number: PCT/CN2023/073075
(87) International publication number: WO 2023/138646

(57) **Abstract**

An aerial transfer carriage and a control method therefor. The aerial transfer carriage includes: a carriage frame (1), a spreader (2), a lifting device (4) and an anti-sway device (3). The anti-sway device (3) includes two correction winch mechanisms (33) and two correction ropes (31). The lifting device (4) drives an end of each of the two correction ropes (31) to be reel and unreel. The two correction winch mechanisms (33) respectively drive another end of each of the two correction ropes (31) to be reel and unreel. When it is required to correct a deflection of the spreader (2), the two opposite ends of the correction rope (31) are wound or unwound respectively, and with the two correction ropes (31) disposed crosswise, the correction rope (31) adjusts a lateral position and a longitudinal position of the spreader (2) during reel and unreel.

## Description

### CROSS-REFERENCE TO RELATED APPLICATIONS

This application claims the priority of Chinese patent application No. 202210061588.6 filed on January 19, 2022 and entitled "Aerial transfer carriage and control method therefor", the disclosure of which is hereby incorporated by reference in its entirety.

### TECHNICAL FIELD

The disclosure relates to an aerial transfer carriage and a control method therefor, and belongs to the technical field of logistics transportation.

### BACKGROUND

At present, the port collection and distribution system mainly relies on highways (accountting for as much as 84%) in China. Highway transportation causes heavy environmental pollution, high transportation costs, and especially the last mile problem of connecting to facilities of container ports, which has become the primary problem of development for the comprehensive transportation system in China.

In order to solve the above technical problems, an aerial rail transportation apparatus for port container logistics has emerged in the existing technology. The aerial rail transportation lines may span highways, rivers, factories and so on to solve the the last mile problem of container transportation.

The application No. 201911423648.9 discloses a carriage frame and an aerial transfer carriage. The carriage frame includes an upper carriage frame and a lower carriage frame. The upper carriage frame and the lower carriage frame can be separated from or close to each other by operating a lifting assembly. After the aerial transfer carriage without a load travels to be in place and stops, the container is located directly under the carriage and the lifting assembly is operated to separate the upper carriage frame and the lower carriage frame. The container is assembled onto the lower carriage frame, and the lifting assembly is operated again to lift the lower carriage frame and container as a whole. The upper carriage frame is closed to and locked to the lower carriage frame. Thus the assembly process of the aerial transfer carriage with the container is completed and the transfer carriage can start to transport. The assembling and connection of the aerial transfer carriage with the container can be implemented by its own apparatus, and has the characteristics of simple operation and high degree of automation.

However, ports have special geographical locations, especially the loading and unloading area close to the seaside generally has relatively high wind speed. Thus although the lifting assembly used in the related technologies has good load-bearing performance, the ropes used in the lifting assembly cannot adapt to the loading and unloading environment with high wind speeds, has poor anti-sway performance, and still need to use ground auxiliary facilities to prevent the lower carriage frame that is separated from the upper carriage frame from being rocked due to wind, and therefore the transportation efficiency is affected.

### SUMMARY

The aerial transfer carriage and control method therefor of the disclosure solve the problem of parking errors caused by the shaking of the current container due to external wind during the lifting process by utilizing one or more embodiments of the disclosure.

In a first aspect, this disclosure proposes an aerial transfer carriage, which includes: a carriage frame, a spreader, a lifting device and an anti-sway device. The spreader is used to carry a container. The lifting device is used for the carriage frame to lift the spreader and the container. The anti-sway device includes two correction winch mechanisms and two correction ropes respectively cooperated with the two correction winch mechanisms; the lifting device drives an end of each of the two correction ropes to be reel and unreel; the two correction winch mechanisms are both mounted on the carriage frame; the two correction winch mechanisms respectively drive another end of each of the two correction ropes to be reel and unreel; the two correction ropes are both tensioned and wound around the spreader; and the two correction ropes are disposed crosswise.

In a second aspect, the disclosure proposes a control method for an aerial transfer carriage, including:
step S1: obtaining a relative position data of the spreader and the container, and obtaining a data of lifting-lowering height of the spreader; step S2: performing step S3, in a condition that the data of lifting-lowering height conforms to a preset data of lifting-lowering height, and the relative position data does not conform to a preset relative position data; performing step S4, in a condition that the relative position data conforms to the preset relative position data, and the data of lifting-lowering height does not conform to the preset data of lifting-lowering height; performing step S3 and S4, in a condition that neither the relative position data conforms to the preset relative position data nor the data of lifting-lowering height conforms to the preset data of lifting-lowering height; and implementing a lifting of the container, in a condition that the relative position data conforms to the preset relative position data and the data of lifting-lowering height conforms to the preset data of lifting-lowering height; step S3: adjusting a relative position of the spreader and the container by a correction winch mechanism to align the spreader with the container, and returning to step S1; and step S4: adjusting a lifting-lowering height of the spreader by the lifting winch mechanism to make a height of the spreader reach a designated height, and returning to step S1.

### BRIEF DESCRIPTION OF DRAWINGS

In order to more clearly illustrate the technical solutions in the embodiments of this application, a brief introduction will be made below to the accompanying drawings needed to be used in the description of the embodiments. Obviously, the accompanying drawings in the following description illustrate some embodiments of this application. For those skilled in the art, other accompanying drawings can also be obtained based on these accompanying drawings without exerting creative efforts.
FIG. 1 is a schematic diagram of an overall structure of an aerial transfer carriage according to an embodiment of the disclosure;
FIG. 2 is an enlarged view of a portion indicated by A in FIG. 1;
FIG. 3 is a partial structural diagram of an anti-sway device and a lifting device of the aerial transfer carriage according to an embodiment of the disclosure;
FIG. 4 is a partial structural diagram of an anti-sway winch mechanism of the aerial transfer carriage according to an embodiment of the disclosure;
FIG. 5 is a partial structural diagram of a lifting winch mechanism of the aerial transfer carriage according to an embodiment of the disclosure;
FIG. 6 is an enlarged view of a portion indicated by B in FIG. 5;
FIG. 7 is an enlarged view of a portion indicated by C in FIG. 5; and
FIG. 8 is a partial structural diagram of two anti-sway devices and two lifting devices of the aerial transfer carriage according to an embodiment of the disclosure.

### DESCRIPTION OF EMBODIMENTS

The technical solutions in the embodiments of this application will be clearly and completely described below with reference to the accompanying drawings in the embodiments of this application. Obviously, the described embodiments are only some embodiments of this application, rather than all the embodiments. Based on the embodiments in this application, all other embodiments obtained by those skilled in the art without creative efforts fall within the scope of protection of this application.

In the disclosure, it needs to be understood that the directions and positions or the positional relationships indicated by the terms "center", "upper", "lower", "front", "back", "left", "right", "vertical", "horizontal", "top", "bottom", "inside", "outside" and so on are based on the orientations or positional relationships shown in the accompanying drawings, which are only for the convenience of describing this disclosure and simplifying the description and does not indicate or imply that the device or element referred to must have a specific orientation, be constructed and operated in a specific orientation, and therefore cannot be understood as a limitation on this disclosure.

The terms "first", "second", "third" and so on in this disclosure are for descriptive purposes only and cannot be understood as indicating or implying the relative importance or implicitly indicating the number of indicated technical features. Thus, features defined as "first", "second" and "third" may explicitly or implicitly include one or more of these features. In the description of the disclosure, unless otherwise stated, "a plurality of" indicates two or more.

In the description of this disclosure, it should be noted that, unless otherwise explicitly stated and limited, the terms "communicated", "mounted", "connected to" and "connection" should be understood in a broad sense. For example, the "connection" may be a fixed connection, a detachable connection, or in an integral body; the "connection" may be a mechanical connection or an electrical connection, and may be a direct connection or an indirect connection through an intermediate medium, and may be an internal connection between two elements. For those skilled in the art, the specific implication of the above terms in this disclosure can be understood according to specific circumstances.

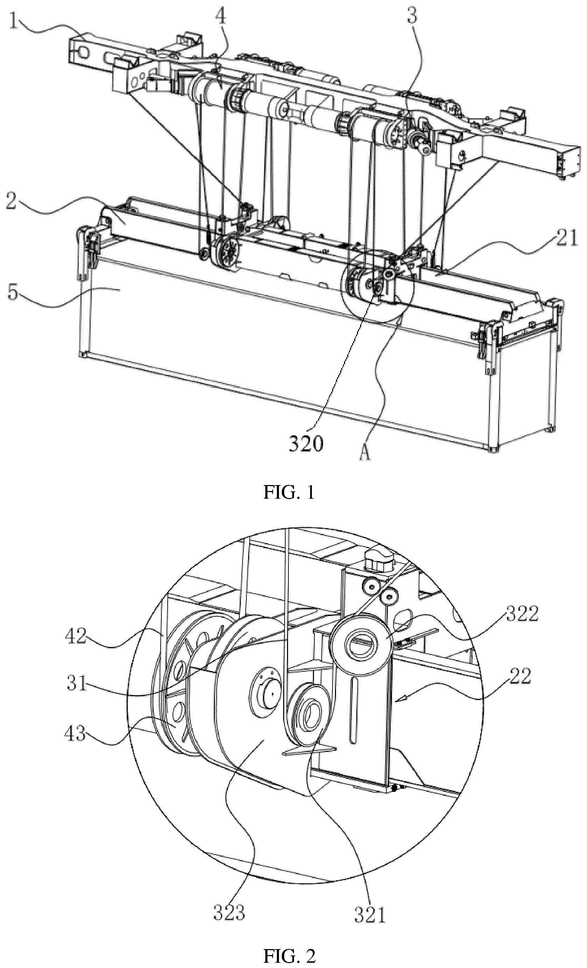

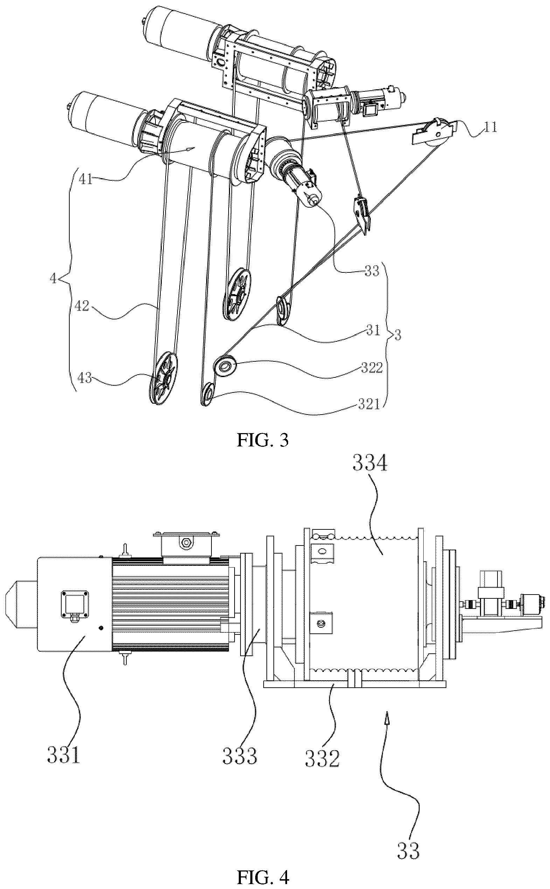

Referring to FIG. 1 and FIG. 3, the disclosure provides an aerial transfer carriage, which may include: a carriage frame 1, a spreader 2, a lifting device 4 and an anti-sway device 3. The carriage frame 1 is disposed in a horizontal direction. The spreader 2 is located below the carriage frame 1, and configured to clamp and carry a container 5. The lifting device 4 is mounted between the spreader 2 and the carriage frame 1, and is used for lowering the spreader 2 or lifting the spreader 2 and the container 5. The anti-sway device 3 is mounted between the spreader 2 and the carriage frame 1 and configured to prevent the spreader 2 from shaking and adjust a lowering position of the spreader 2, so as to implement an action of correcting of deflection on the spreader 2 to realize an alignment of the spreader 2 with the container 5.

In some embodiments, the anti-sway device 3 may include two correction winch mechanisms 33 and two correction ropes 31 respectively fitted with the two correction winch mechanisms 33. The lifting device 4 drives an end of each of the two correction ropes 31 to be reel and unreel. The two correction winch mechanisms 33 are both mounted on the carriage frame 1, and respectively drive another end of each of the two correction ropes 31 to be reel and unreel. The two correction ropes 31 are both tensioned and wound around the spreader 2, and are disposed crosswise.

Referring to FIG. 1 and FIG. 2, in some embodiments, the spreader 2 is disposed with a first correction portion 21 and a second correction portion 22. The first correction portion 21 and the second correction portion 22 are oppositely disposed in a horizontal direction. The two correction ropes 31 are respectively tensioned and wound around the first correction portion 21 and the second correction portion 22. Two opposite ends of the correction rope 31 are connected to the lifting device 4 and the correction winch mechanism 33 respectively.

When it is required to adjust a position of the spreader 2, the lifting device 4 and the correction winch mechanism 33 wind or unwind two ends of the correction rope 31 respectively. With the two correction ropes 31 disposed crosswise, when the two correction ropes 31 are reel and unreel, the correction ropes 31 adjust both a lateral position and a longitudinal position of the spreader 2, and therefore an action of correcting and anti-swaying is implemented on the spreader 2, so that the spreader 2 is located directly below the carriage frame 1, and an accuracy of the alignment of the spreader 2 and the container 5 is ensured.

Referring to FIG.1, FIG. 2 and FIG.3, in some embodiments, the anti-sway device 3 may also include two correction pulley mechanisms 320 which are both mounted on the spreader 2. The two correction ropes 31 are tensioned and wound around the two correction pulley mechanisms 320 respectively. The two correction pulley mechanisms 320 are mounted on the first correction portion 21 and the second correction portion 22 respectively.

In some embodiments, the correction pulley mechanism 320 may include a correction movable pulley 321. The two correction ropes 31 are respectively tensioned and wound around two correction movable pulleys 321, so that the correction rope 31 is tensioned and wound around the spreader 2. The correction pulley mechanism 320 may also include a pulley seat 323. The pulley seats 323 of the two correction pulley mechanisms 320 are fixedly mounted on the first correction portion 21 and the second correction portion 22 through bolts, respectively. The correction movable pulleys 321 of the two correction pulley mechanisms 320 are rotatably connected to two pulley seats 323, respectively.

In some embodiments, the correction pulley mechanism 320 may also include a rotating wheel 322, which is rotatably connected to the pulley seat 323. The rotating wheel 322 is connected between the correction winch mechanism 33 and the correction movable pulley 321. The correction rope 31 is sequentially tensioned and wound around the correction movable pulley 321 and the rotating wheel 322. The rotating wheel 322 is used to prevent the connection rope 31 during moving from mechanically interfering with the spreader 2, thereby preventing the connection rope 31 from being damaged and broken.

When it is required to adjust the position of the spreader 2, an end of the correction rope 31 is connected to the lifting device 4, and a side wall of the correction rope 31 is sequentially tightened and wound around the correction movable pulley 321 and the rotating wheel 322. Another end of the correction rope 31 is connected to the correction winch mechanism 33. When the lifting device 4 and the correction winch mechanism 33 wind or unwind the correction rope 31, the correction movable pulley 321 is used to reduce a tension exerted by the lifting device 4 and the correction winch mechanism 33 on the correction rope 31, thereby reducing a load borne by the lifting device 4 and the correction winch mechanism 33, and improving an efficiency of correcting of deflection.

Referring to FIG. 1 and FIG. 3, in some embodiments, the carriage frame 1 is mounted with a guide wheel 11. The correction rope 31 is sequentially tensioned and wound around the correction movable pulley 321 and the guide wheel 11. The guide wheel 11 is used to guide the correction rope 31 to be reel and unreel toward a direction where the correction winch mechanism 33 is located.

In some embodiments, the guide wheel 11 may be a fixed pulley. The correction winch mechanism 33 and the guide wheel 11 are both mounted on a side of the carriage frame 1 facing the spreader 2, and the guide wheel 11 is located diagonally above the the correction movable pulley 321. The guide wheel 11 is connected between the rotating wheel 322 and the correction winch mechanism 33. The correction rope 31 is sequentially tensioned and wound around the correction moving pulley 321, the rotating wheel 322 and the guide wheel 11.

In some embodiments, the number of guide wheels 11 is two. Two guide wheels 11 are respectively mounted at two opposite ends of the carriage frame 1 in a width direction. The two correction ropes 31 are respectively tensioned and wound around the two guide wheels 11. The guide wheel 11 is located diagonally above the correction movable pulley 321, so that a portion of the correction rope 31 located between the rotating wheel 322 and the guide wheel 11 is inclined. With the two guide wheels 11, the two correction ropes 31 are disposed crosswise, facilitating the two correction ropes 31 to adjust the lateral position and the longitudinal position of the spreader 2.

Referring to FIG. 3 and FIG. 4, in some embodiments, the correction winch mechanism 33 may include a correction motor 331 and an anti-sway drum 334. The correction motor 331 drives the anti-sway drum 334 to rotate so as to wind and unwind the correction rope 31.

In some embodiments, the correction winch mechanism 33 may also include a correction support 332. The correction support 332 is connected to two opposite ends of the anti-sway drum 334 through bearings. The anti-sway drum 334 rotates relative to the correction support 332. The correction support 332 is fixedly connected to the carriage frame 1 through bolts. An output shaft of the correction motor 331 is coaxially connected to an end of the anti-sway drum 334, and the correction motor 331 is used to drive the anti-sway drum 334 to rotate. An end of the correction rope 31 is fixedly connected to a side wall of the anti-sway drum 334.

In some embodiments, the correction winch mechanism 33 may also include a correction reducer 333. An output shaft of the correction motor 331, the correction reducer 333 and the anti-sway drum 334 are fixedly coaxially connected in sequence. The output shaft of the correction motor 331 is connected to an input end of the correction reducer 333, and an output end of the correction reducer 333 is connected to an end of the anti-sway drum 334.

When it is required to wind and unwind the correction rope 31, the staff activates the correction motor 331, and in turn the output shaft of the correction motor 331 rotates to drive the anti-sway drum 334 to rotate, and then the anti-sway drum 334 rotates to drive the correction rope 31 to be reel and unreel, and therefore an adjustment of the correction rope 31 on a position of the spreader 2 is realized. The correction reducer 333 may be used to adjust a rotation speed of the anti-sway drum 334 to prevent the anti-sway drum 334 from excessively winding and unwinding the correction rope 31. At the same time, since the correction motor 331, the correction reducer 333 and the anti-sway drum 334 are coaxially fixedly connected, a structure of the correction winch mechanism 33 is more compact, and therefore a mounting space required for the correction winch mechanism 33 in the carriage frame 1 is saved.

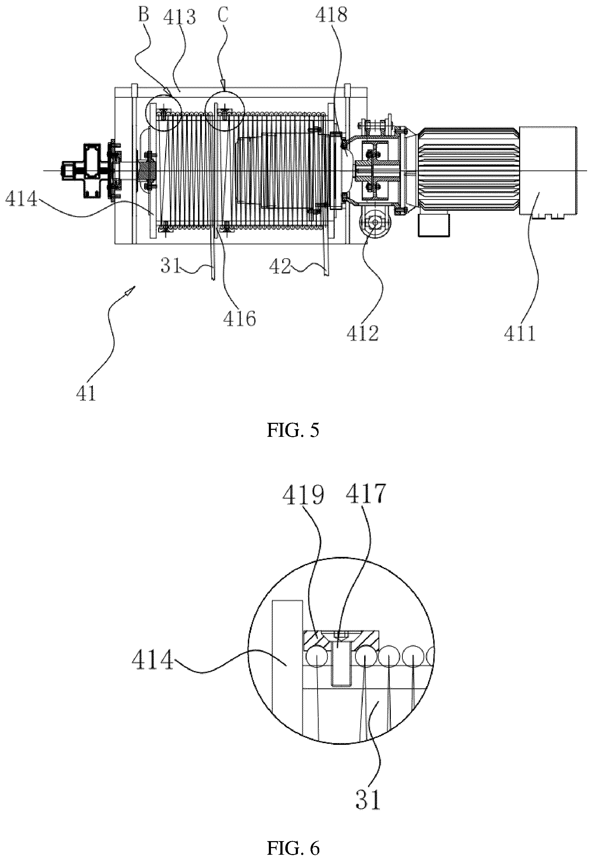

Referring to FIG. 2 and FIG. 5, in some embodiments, the lifting device 4 may include two lifting winch mechanisms 41. The two lifting winch mechanisms 41 are both mounted on the carriage frame 1. The two winch mechanisms 41 respectively drive an end of each of the two correction ropes 31 to be reel and unreel. The two lifting winch mechanisms 41 are mounted on a side of the carriage frame 1 facing the spreader 2. The two lifting and winch mechanisms 41 are respectively located directly above the two pulley seats 323.

In some embodiments, the lifting winch mechanism 41 may include a lifting motor 411 and a lifting drum 414. The lifting motor 411 drives the lifting drum 414 to rotate to wind and unwind the correction rope 31. An output shaft of the lifting motor 411 is coaxially connected to an end of the lifting drum 414, and the lifting drum 414 is located directly above the pulley seat 323. An end of the correction rope 31 away from the correction winch mechanism 33 is fixedly connected to a side wall of the lifting drum 414. The lifting motor 411 drives the lifting drum 414 to rotate, and the lifting drum 414 drives an end of the correction rope 31 away from the correction winch mechanism 33 to be reel and unreel, and therefore an adjustment of a position of the spreader 2 is realized.

In some embodiments, the lifting winch mechanism 41 may further include a lifting support seat 413. The lifting support seat 413 is connected to the two opposite ends of the lifting drum 414 through bearings. The lifting drum 414 rotates relative to the lifting support seat 413. The lifting support seat 413 is fixedly connected to the carriage frame 1 through bolts, so that the lifting winch mechanism 41 is mounted on the carriage frame 1.

In some embodiments, the lifting winch mechanism 41 may also include a lifting reducer 418 and a support brake 412. The output shaft of the lifting motor 411, the support brake 412, the lifting reducer 418 and the lifting drum 414 are fixedly coaxially connected in sequence. The lifting reducer 418 and the support brake 412. The output shaft of the lifting motor 411 is connected to an input end of the support brake 412, and an output end of the support brake 412 is connected to an input end of the lifting reducer 418. The lifting reducer 418 is plug-fitted into the lifting drum 414, and an output end of the lifting reducer 418 is fixedly coaxially connected to the lifting drum 414, so that a structure of the lifting winch mechanism 41 is more compact, and a mounting space required for the lifting winch mechanism 41 in the carriage frame 1 is saved.

In some embodiments, the support brake 412 is a drum electro-hydraulic brake.

When it is requried to wind and unwind an end of the correction rope 31 away from the correction winch mechanism 33, the staff activates the lifting motor 411, and then the output shaft of the lifting motor 411 rotates to drive the lifting drum 414 to rotate, and then the lifting drum 414 rotates to drive an end of the correction rope 31 away from the correction winch mechanism 33 to be reel and unreel, and therefore an adjustment of the correction rope 31 on a position of the spreader 2 is realized and an efficiency of correcting of deflection is improved. The lifting reducer 418 is used to adjust a rotation speed of the lifting drum 414, to prevent the lifting drum 414 from excessively winding and unwinding the end of the correction rope 31 away from the correction winch mechanism 33.

Referring to FIG. 1 and FIG. 3, in some embodiments, the lifting device 4 may also include two lifting ropes 42 and two lifting pulley mechanisms. The two lifting pulley mechanisms are both mounted on the spreader 2. The two lifting ropes 42 are respectively tensioned and wound around the two lifting pulley mechanisms, and the two lifting winch mechanisms 41 respectively drive the two lifting ropes 42 to be reel and unreel.

In some embodiments, the two lifting ropes 42 are disposed oppositely in the horizontal direction. An end of the lifting rope 42 is fixedly connected to the carriage frame 1. The lifting rope 42 is tensioned and wound around the lifting pulley mechanism. Another end of the lifting rope 42 is fixedly connected to the lifting drum 414, so that the lifting winch mechanism 41 drives the lifting rope 42 to be reel and unreel.

In some embodiments, the two lifting pulley mechanisms are disposed oppositely along a horizontal direction of the spreader 2, and the two lifting pulley mechanisms are respectively mounted in the two pulley seats 323, that is, the two lifting pulley mechanisms are located directly below the two lifting winch mechanism 41 respectively.

When the spreader 2 needs to lift the container 5, the staff activates the lifting motor 411, and in turn the lifting motor 411 drives the lifting drum 414 to rotate, and in turn the lifting drum 414 rotates to drive the lifting rope 42 to be wound. With the lifting rope 42 tensioned and wound around the lifting pulley mechanism, the lifting rope 42, during wound, drives the spreader 2 to rise, so as to enable the spreader 2 to lift the container 5. When it is required to suspend a lifting, the support brake 412 brakes the lifting motor 411, and at this time, the spreader 2 carries the container 5 and stops in midair. Since the support brake 412 is a drum electro-hydraulic brake, the lifting motor 411 can be kept stable and prevented from being activated incorrectly. Therefore the lifting drum 414 is prevented from unwinding the lifting rope 42 incorrectly, and the spreader 2 and the container 5 are prevented from falling.

When it is required to lower the spreader 2, the lifting motor 411 is activated to drive the lifting drum 414 to rotate. The lifting drum 414 rotates to drive the lifting rope 42 to be unwound, and the lifting rope 42 is tensioned and wound around the lifting pulley mechanism to lower the spreader 2.

Referring to FIG. 5, FIG. 6 and 7, in some embodiments, the correction rope 31 and the lifting rope 42 are respectively located at two opposite ends of the side wall of the lifting drum 414. A partition 416 is fixedly connected to the side wall of the lifting drum 414 in a circumferential direction. The partition 416 is used to separate the correction rope 31 and the lifting rope 42 to prevent the lifting rope 42 and the lifting rope 42 from being wound with one another during a rotation of the lifting drum 414.

In some embodiments, the lifting drum 414 is disposed with a rope press plate 419 and a fastening bolt 417. The fastening bolt 417 penetrates through the rope press plate 419 and is threadedly connected to the side wall of the lifting drum 414. An axis of the fastening bolt 417 is perpendicular to an axial direction of the lifting drum 414, and a side wall of the rope press plate 419 is used to press against the correction rope 31 or the lifting rope 42 to realize a fixed connection of an end of the correction rope 31 or an end of the lifting rope 42 to the lifting drum 414.

In some embodiments, the numbers of fastening bolts 417 and rope press plates 419 are both two. Two rope press plates 419 are respectively located at two opposite ends of the lifting drum 414. The two rope press plates 419 are used to press against the correction rope 31 and the lifting rope 42 respectively.

Referring to FIG. 1, FIG. 2 and FIG. 3, in some embodiments, the lifting pulley mechanism may also include a lifting movable pulley 43. The lifting movable pulley 43 is rotatably connected within the pulley seat 323. The lifting movable pulley 43 is used for the lifting rope 42 to be tensioned and wound around.

When the lifting drum 414 winds and unwinds the lifting rope 42, the lifting rope 42 is tensioned and wound around the lifting movable pulley 43, to drive the spreader 2 to rise and fall.

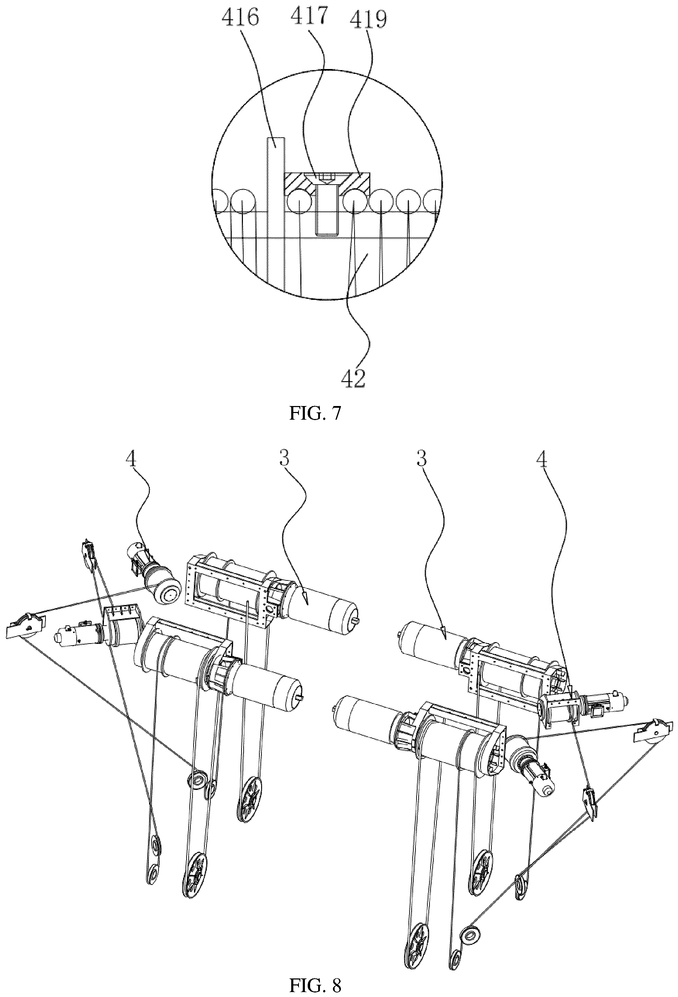

Referring to FIG. 1 and 8, in some embodiments, the numbers of the lifting devices 4 and the anti-sway devices 3 are both two. Two lifting devices 4 are disposed oppositely in a longitudinal direction. Two anti-sway devices 3 are disposed oppositely in the longitudinal direction. The two lifting devices 4 are located between the two anti-sway devices 3. The two anti-sway devices 3 are used to correct a deflection of all four corners of the spreader 2, thereby improving an efficiency of correcting of deflection of the spreader 2. With the two lifting devices 4, a stability and efficiency of a lowering or lifting of the spreader 2 and the container 5 is improved. The two lifting devices 4 are located between the two anti-sway devices 3 to prevent the correction rope 31 and the lifting rope 42 from being wound with one another during an operation.

It can be seen from the above technical solutions that the disclosure has at least the following advantages and positive effects. The aerial transfer carriage of the disclosure may include a carriage frame 1, a spreader 2, a lifting device 4 and an anti-sway device 3. The lifting device 4 and anti-sway device 3 are both mounted between the carriage frame 1 and the spreader 2. When the spreader 2 is required to lift the container 5, the lifting device 4 is used to move the spreader 2 towards a direction where the container 5 is located, and the anti-sway device 3 is used to adjust a position of the spreader 2 to prevent the spreader 2 from deflecting, so that the spreader 2 is accurately aligned with the container 5, and the lifting device 4 may be used again for lifting.

The anti-sway device 3 as mentioned above can also include two correction ropes 31. The two correction ropes 31 are disposed crosswise, that is, the two correction ropes 31 are disposed at an angle and cross with each other. The two correction ropes 31 are both connected to the spreader 2. When it is required to correct a deflection of the spreader 2, the two opposite ends of the correction rope 31 are wound or unwound respectively, and with the two correction ropes 31 disposed crosswise, the correction rope 31 during reel and unreel adjusts a lateral position and a longitudinal position of the spreader 2.

The anti-sway device 3 as mentioned above may also include two correction winch mechanisms 33. The two correction winch mechanisms 33 are respectively used to connect to the two correction ropes 31. The correction winch mechanism 33 and the lifting device 4 respectively winds and unwinds the two opposite ends of the correction ropes 31, thereby improving an efficiency of correcting of deflection of the correction rope 31 on the spreader 2.

In addition, the anti-sway device 3 may also include two correction movable pulleys 321. The two correction movable pulleys 321 are respectively for the two correcting ropes 31 to be tensioned and wound around the spreader 2, thereby reducing a load borne by the correction winch mechanism 33.

The disclosure also provides a control method for an aerial transfer carriage, which may include:
step S1: obtaining a relative position data of the spreader 2 and the container, and obtaining a data of lifting-lowering height of the spreader 2;
step S2: performing step S3 in a condition that the data of lifting-lowering height conforms to a preset data of lifting-lowering height, and the relative position data does not conform to a preset relative position data; performing step S3 and step S4 in a condition that the relative position data conforms to the preset relative position data, and the data of lifting-lowering height does not conform to the preset data of lifting-lowering height, then step S4 is executed; in a condition that neither the relative position data conforms to the preset relative position data nor the data of lifting-lowering height conforms to the preset data of lifting-lowering height; and implementing a lifting of the container, in a condition that the relative position data conforms to the preset relative position data and the data of lifting-lowering height conforms to the preset data of lifting-lowering height;
step S3: adjusting a relative position of the spreader 2 and the container by a correction winch mechanism 33 to align the spreader 2 with the container, and returning to step S1; and
step S4: adjusting a lifting-lowering height of the spreader 2 by the lifting winch mechanism 41, to make a height of the spreader 2 can reach a designated height, and returning to step S 1.

It should be understood that when the spreader 2 is aligned with the container, the spreader 2 can be accurately docked with the container, so that the spreader 2 can be accurately connected and fitted with the container. The lifting device 4 can lift the container to a designated height, so that the container can avoid other containers and the container can be moved to a designated location as needed. In some embodiments, when the container is placed on the ground, the lifting winch mechanism 41 in the lifting device 4 can control a height of the spreader 2, so that a portion of the spreader 2 used to connect to the container can be close to the container. The correction winch mechanism 33 can control the portion of the spreader 2 used to connect to the container to be accurately docked with the container, so that the spreader 2 can be accurately connected to the container 3.

The above-mentioned preset relative position data refers to a relative position data of the spreader 2 and the container when the spreader 2 is aligned with the container. The preset data of lifting-lowering height refers to a data of designated lifting height that the spreader 2 needs to reach. The designated lifting height may be determined according to an actual working condition on site.

In the above description of the embodiments, the specific features, structures, materials or characteristics described may be combined in any suitable manner in any one or more embodiments or examples.

The above are only embodiments of the disclosure, but the protection scope of the disclosure is not limited thereto. The changes or substitutions within the technical scope disclosed in the disclosure that can be easily obtained by those skilled in the art are all contained by the protection scope sought for by this disclosure. Therefore, the protection scope of the disclosure should be subject to the protection scope of the attached claims.

## Claims

1. An aerial transfer carriage, comprising:
a carriage frame;
a spreader, used to carry a container;
a lifting device, used for the carriage frame to lift the spreader and the container; and
an anti-sway device, comprising two correction winch mechanisms and two correction ropes respectively cooperated with the two correction winch mechanisms; the lifting device drives an end of each of the two correction ropes to be reel and unreel; the two correction winch mechanisms are both mounted on the carriage frame; the two correction winch mechanisms respectively drive another end of each of the two correction ropes to be reel and unreel; the two correction ropes are both tensioned and wound around the spreader; and the two correction ropes are disposed crosswise.

2. The aerial transfer carriage according to claim 1, wherein the anti-sway device further comprises two correction pulley mechanisms which are both mounted on the spreader, wherein the two correction ropes are tensioned and wound around the two correction pulley mechanisms respectively.

3. The aerial transfer carriage according to claim 2, wherein the correction pulley mechanism comprises a correction movable pulley, the two correction ropes being respectively tensioned and wound around two correction movable pulleys.

4. The aerial transfer carriage according to claim 3, wherein the carriage frame is mounted with a guide wheel; the correction rope is sequentially tensioned and wound around the correction movable pulley and the guide wheel; the guide wheel is used to guide the correction rope to be reel and unreel toward a direction where the correction winch mechanism is located.

5. The aerial transfer carriage according to claim 1, wherein the correction winch mechanism comprises a correction motor and an anti-sway drum; the correction motor drives the anti-sway drum to rotate to wind and unwind the correction rope.

6. The aerial transfer carriage according to claim 5, wherein the correction winch mechanism further comprises a correction reducer; an output shaft of the correction motor, the correction reducer and the anti-sway drum are fixedly coaxially connected in sequence.

7. The aerial transfer carriage according to claim 1, wherein the lifting device comprises two lifting winch mechanisms; the two lifting winch mechanisms are both mounted on the carriage frame, which respectively drive an end of each of the two correction ropes to be reel and unreel.

8. The aerial transfer carriage according to claim 7, wherein the lifting winch mechanism comprises a lifting motor and a lifting drum; the lifting motor drives the lifting drum to rotate to wind and unwind the correction rope.

9. The aerial transfer carriage according to claim 8, wherein the lifting winch mechanism further comprises a lifting reducer and a support brake; an output shaft of the lifting motor, the support brake, the lifting reducer and the lifting drum are fixedly coaxially connected in sequence.

10. The aerial transfer carriage according to claim 9, wherein the lifting device further comprises two lifting ropes and two lifting pulley mechanisms; the two lifting pulley mechanisms are both mounted on the spreader; the two lifting ropes are respectively tensioned and wound around the two lifting pulley mechanisms; and the two lifting winch mechanisms respectively drive the two lifting ropes to be reel and unreel.

11. The aerial transfer carriage according to any one of claims 1 to 10, wherein the numbers of the lifting devices and the anti-sway devices are both two; two lifting devices are disposed oppositely in a longitudinal direction; two anti-sway devices are disposed oppositely in the longitudinal direction; the two lifting devices are located between the two anti-sway devices.

12. A control method for an aerial transfer carriage, comprising:
step S1: obtaining a relative position data of a spreader and a container, and obtaining a data of lifting-lowering height of the spreader;
step S2: performing step S3, in a condition that the data of lifting-lowering height conforms to a preset data of lifting-lowering height, and the relative position data does not conform to a preset relative position data; performing step S4, in a condition that the relative position data conforms to the preset relative position data, and the data of lifting-lowering height does not conform to the preset data of lifting-lowering height; performing step S3 and S4, in a condition that neither the relative position data conforms to the preset relative position data nor the data of lifting-lowering height conforms to the preset data of lifting-lowering height; and implementing a lifting of the container completed, in a condition that the relative position data conforms to the preset relative position data and the data of lifting-lowering height conforms to the preset data of lifting-lowering height;
step S3: adjusting a relative position of the spreader and the container by a correction winch mechanism to align the spreader with the container, and returning to step S1; and
step S4: adjusting a lifting-lowering height of the spreader by the lifting winch mechanism, to make a height of the spreader reach a designated height, and returning to step S1.
